# EUROPEAN PATENT APPLICATION

(11) **EP 4 811 167 A1**
(43) Date of publication of application: **23.09.2026**
(21) Application number: 25165437.2
(22) Date of filing: 21.03.2025
(51) Int. Cl.: G06F 16/334, G06F 16/583, G06F 16/783

(54) **REPRESENTATION-BASED RETRIEVAL OF IMAGES BASED ON A TEXT QUERY**

(71) Applicant: Robert Bosch GmbH, 70442 Stuttgart (DE)
(72) Inventor: Jitendra Yasaswi Bharadwaj, Katta, 522124 Andhra Pradesh (IN); Gendler, Asaf, 3508409 Haifa (IL)

(57) **Abstract**

A method (100) for retrieving one or more images (2) from a set of images (3) based on a text query (1), comprising the steps of:
• computing (110) a representation of the text query (1) in a working space (4) as a query representation (1a);
• providing (120), for each image (2) in the set of images (3), a plurality of representations in the working space (4) as image aspect representations (2a1-2a5);
• determining (130), based at least in part on the query representation (1a), in a predetermined manner, a set of coefficients (5);
• aggregating (140), for each image (2) in the set of images (3), based on these coefficients (5), in a predetermined manner, the respective image aspect representations (2a1-2a5) into a respective image representation (2a);
• comparing (150) the query representation (1a) to the image representations (2a); and
• determining (160) one or more images (2) to be returned as result (6) of the text query (1) based at least in part on the outcome (150a) of this comparison (150).

## Description

The present invention relates to the retrieval of images from a large set of pre-stored images using a text query. This retrieval may, for example, be used to obtain suitable training examples for downstream machine learning models.

### Background

For many applications, such as composing a training dataset for machine learning models, it is necessary to find suitable images from a large set of pre-stored images, starting from a given text query. Representation-based retrieval methods map ("embed") both the text query and the pre-stored images into a common working space, and then compare the representation of the query to the representations of the images to determine which representation of an image comes closest to the representation of the query. The image to which this representation corresponds is then returned as the result of the query. Examples for this method are well-known under the names CLIP, BLIP, BLIP2, FILIP, SIGLIP and LLIP.

It is computationally expensive to compute the representations of the images each and every time a query is to be processed, in particular if the given set of images contains millions of images. It is therefore advantageous to compute these representations only once, and then use these stored representations time and time again. However, some of the more advanced methods mentioned above, like BLIP2 or LLIP, need a representation of something that is dependent both on an image and on a text query. These representations cannot be computed in advance off-line.

### Disclosure of the invention

The invention provides a method for retrieving one or more images from a set of images based on a text query.

In the course of this method, a representation of the text query in a working space is computed as a query representation. For example, this query representation may be computed by a trained encoder. Also, for each image in the set of images, a plurality of representations in the working space as image aspect representations is provided. In particular, these image aspect representations may have been pre-computed and may be retrieved from a memory. Each image aspect representation may be considered to relate to a particular aspect of the image even though this aspect need not be explicitly formulated when creating the image representations. For example, if a trained encoder is used to create the image representations, it will have learned to encode, into a set of n representations, the n most important aspects of the image content.

The working space is typically chosen as a space in which similarities or dissimilarities between the query content and the image content, and between different image contents, manifest themselves in similarity respectively dissimilarity, or in closeness respectively remoteness, or representations from one another. For example, the working space may be a vector space into which trained encoders encode the query on the one hand, and the images on the other hand. The working space is typically of a lower dimensionality than the space of text queries and the space of images. That is, the representations in the working space typically contain less information, i.e., depend on less independent variables, than the text query, respectively the images.

Based at least in part on the query representation, a set of coefficients is computed in a predetermined manner. Based on these coefficients, for each image in the given set of images, the respective image aspect representations are aggregated into a respective image representation. That is, there is now only one image representation per image.

The query representation is compared to the image representations. Based at least in part on the outcome of this comparison, one or more images to be returned as result of the text query are determined.

The inventors have found that, in this manner, the image representation to which the query representation is compared can be made dependent on the query representation, and thus on the text query, in a computationally far cheaper manner than by amalgamating content of the text query with image content and creating a representation of this in the working space. In particular, if the representations are created by trained encoders (i.e., machine learning models), a "forward pass" through such a trained encoder from content space into working space is expensive. By contrast, the coefficients may be determined much quicker because this already happens in the working space that is typically of a much lower dimensionality. Aggregating the image aspect representations may be done, e.g., with efficient matrix or vector operations and is therefore cheap.

The end result is that the benefits of having image representations that are dependent on the text query that are known from the literature, such as the potential for a better fine-grained search, may be obtained without biting the bullet that the image representations can no longer be pre-computed off-line and quickly retrieved from a memory in real-time.

At the same time, the use of multiple image aspect representations also allows for a more precise evaluation of images that contain several objects or themes. A prime example of such images are images of traffic situations that usually contain a plurality of traffic participants of various kinds (cars, trucks, buses, pedestrians, cyclists), road markings, as well as diverse obstacles. This means that sentences like "a pedestrian is crossing the road on the left side", "a bus is standing in front of a traffic light, waiting for the light to change", and "many cars are parked to the side of the road next to a large building" may all be adequate descriptions of one and the same image. The image should therefore be returned in the result set if one of these sentences is used as the text query. This means that the image representation in the working space needs to be close to several query representations that may be quite different from one another, and thus quite remote from one another in the working space. This is very difficult to achieve without making the image representation dependent on the text query. And as discussed above, the present method allows to make the image representation dependent on the text query in a particularly computationally efficient manner.

The different image aspect representations may be created in any suitable manner.

For example, vector representations of parts of the image, such as patches of the image, may be combined in different compositions to form different image aspect representations. For example, the vector representations may be generated as it is done in the known CLIP method, and they bay be combined into a representation of the image as a whole (i.e., an image aspect representation in the context of the present method) by cross-attention as it is done in the known BLIP method. Within the present method, this is a one-time effort because, as discussed above, the generation of the final image representation from image aspect representations is cheap.

In another example, representations obtained from the image by differently trained encoders, and/or by encoders with different architectures, may be used to create different image aspect representations. This allows to steer the different image aspect representations towards aspects that are known to be important in some way. For example, when processing images of traffic scenes, one encoder may put a higher emphasis on traffic signs, a second encoder may put a higher emphasis on traffic participants, and a third encoder may put a higher emphasis on road markings.

In another example, representations obtained as different samples produced from the image by a probabilistic encoder may be used as image aspect representations. The aggregation of these image aspect representations using the coefficients then provides a better motivation for using a probabilistic encoder in the first place: without such aggregation, the question might arise why one is using this particular sample drawn from the encoder and not another one.

In a particularly advantageous embodiment, the coefficients are determined from the query representation by a trained machine learning model. In this manner, by training the machine learning model, the combination of the image aspect representations into the one single image representation may be specifically adapted to the application at hand. This is particularly advantageous if the creation of the individual image aspect representations has not been explicitly steered towards particular aspects. Because the machine learning model maps from the working space to a small number of coefficients, it can be small, so a forward pass of a query representation through this model is cheap. In one example, the machine learning model may comprise a neural network with at least one fully connected layer. After training, the machine learning model may "choose", based on the text query, which image aspect representations are relevant, and capture the concepts presented in the text query. In particular, using a machine learning model allows for a large diversity between final image representations created for one and the same image based on different text queries. Each such final representation may be "expert" at different concepts or themes.

In a particularly advantageous embodiment, aggregating comprises computing a weighted sum of the image aspect representations with the coefficients as weights. This is particularly lightweight computationally because it only involves an additional matrix multiplication, an operation that is implemented very efficiently.

In a further particularly advantageous embodiment, a first vector that is a concatenation of the image aspect representations is set up. A second vector may then be set up that is a concatenation of as many copies of the query representation as there are image aspect representations, with each copy of the query representation multiplied with a corresponding weight of an image representation. A dot product of the first vector and the second vector may then be computed as the sought weighted sum. The advantage of this is two-fold: First, the dot product is implemented in a computationally very efficient manner. Second, the first vector with the image aspect representations may be pre-stored in a vector database and retrieved, based on the second vector, with an efficient searching algorithm. That is, vector databases may be re-purposed in the context of the present method for a further speed-up and a saving of memory.

In a further particularly advantageous embodiment, the comparing of the query representation with the image representations comprises computing cosine similarities between the query representation and the image representations. This is a continuous measure for similarity and closeness in the working space that is particularly cheap to compute. Based on this or any other suitable distance or similarity measure, the image representations of the images to be returned as a result set may then be selected. For example, a selection of the top-N (e.g., top-1) image representations that are closest/most similar to the query representation may be made. Optionally, there may also be a threshold value for the similarity/closeness. E.g., if an image representation falls short of the threshold value, it may be excluded from the result set.

In a further particularly advantageous embodiment, the set of images comprises frames of a video data stream. From the result of the text query, a position in the video data stream where a situation described in the text query occurs is computed. In this manner, one and the same video stream may be analyzed interactively, in real-time, for different aspects. For example, during test drives with at least partially automated vehicles, many hours of video footage are recorded. Out of this footage, only a few scenes may be important as interesting and new content, e.g., for the further machine learning based training of an automated driving system. With the present method, such content may be found more easily. A manual review of the video footage might even miss it altogether.

The same applies in another example where the video data stream is recorded in a surveillance system. In such an application, it is typically very rare for anything interesting to happen in the monitored area. With the present method, such interesting events may be searched for with text queries such as "a person trying to climb the fence", "a person working on the fence", or "a person doing reconnaissance on the fenceline".

In another particularly advantageous embodiment, for each image returned as result of the text query, a textual description stored in association with the respective image may be obtained. A description of a scene described in the text query may then be determined from said textual descriptions. In this manner, the pre-existing knowledge in the textual descriptions may be put to use. The so-obtained description of the scene may then be more realistic, and/or more specific to an application at hand, than a description generated "from scratch" by means of a generative machine learning model, such as a large language model, LLM.

In a further particularly advantageous embodiment, using at least one image returned as result of the text query, a machine learning model may be trained. Such training frequently suffers from "imbalance" in the training dataset in that there are too few training examples for some classes or situations. For example, when a training dataset for recognizing traffic signs is assembled, some traffic signs (such as signs relating to speed limits or priority) will be abundant, whereas, e.g., a warning sign that the road leads to the bank of a waterway only occurs very rarely. Nonetheless, if it does appear, this warning sign is very important and must be recognized correctly. In another example, it rarely happens that there is lost cargo (such as luggage or even pieces of furniture) on the motorway, but it does happen sometimes, and if it does happen, a prompt reaction (braking or evasion) is required. With the present method, many hours of video footage may be easily searched for rare traffic signs, lost cargo or other content that only occurs very rarely. In this manner, there is then sufficient training data even for such rare cases.

In particular, once the machine learning model has been trained, at least one image captured by at least one sensor may be inputted to the trained machine learning model. From the output of the trained machine learning model, an actuation signal may be computed. A vehicle, a driving assistance system, a robot, a quality inspection system, a surveillance system, and/or a medical imaging system, may then be actuated with the actuation signal. In this context, the use of the present method improves the probability that the action performed by the respective actuated system in response to the actuation signal is appropriate in the situation characterized by the inputted image.

The invention also provides a system for retrieving one or more images from a set of images based on a text query. In particular, this system may be used to perform the method described above. It therefore provides one way to realize the method described above, but there are also other ways.

The system comprises a first trainable encoder that is configured to compute a representation of the text query in a working space as a query representation. Furthermore, there is a memory that is configured to store, for each image in the set of image, a plurality of representations in the working space as image aspect representations. In this manner, pre-computed image aspect representations are available on top of freshly generated query representations.

The system further comprises a trainable coefficient computing module that is configured to determine, based at least in part on the query representation produced by the first trainable encoder, a set of coefficients. As discussed before, this trainable coefficient computing module may comprise a neural network, e.g., a network with at least one fully connected layer.

The system further comprises a representation computing module. This representation computing module is configured to aggregate, for each image in the set of images, based on said coefficients, the respective image aspect representations into a respective image representation.

The system further comprises a comparing module that is configured to compare the query representation computed by the first trainable encoder to the image representations computed by the representation computing module.

The system further comprises a result computing module that is configured to determine one or more images to be returned as result of the text query based at least in part on the outcome of said comparison produced by the comparing module.

As discussed before, the system proposed here allows to retrieve images even from a large set of millions of images in real-time because, at the time of receiving the text query, only one forward pass of this text query through the first trainable encoder is required. The generation of the image representation from the image aspect representations is much cheaper than a forward pass through an encoder to generate a new representation that is dependent both on image content and the text query.

In a particularly advantageous embodiment, the system further comprises a second trainable encoder. This second trainable encoder is configured to compute, for an inputted image, a plurality of representations in the working space as image aspect representations. In this manner, the image aspect representations may be obtained in a one-time effort and then stored in the memory of the system.

The invention also provides a method for training the system discussed above.

In the course of this method, a set of training examples is provided. Each such training example comprises a text query. The text query is labelled with a to-be-retrieved image as ground truth. This is the image that the system should ideally return given the text query.

For each training example, the respective text query is processed by the system into a result comprising one or more returned images. It is then rated, by a predetermined loss function, how well this result corresponds to the to-be-retrieved image with which the respective training example is labelled. First encoder parameters that characterize the behaviour of the first trainable encoder, as well as coefficient parameters that characterize the behaviour of the coefficient computing module, are then optimized towards the goal of improving, when further training examples are processed, the rating by the loss function. Herein, it is possible to optimize both the first encoder parameters and the coefficient parameters at the same time, to optimize first the one and then the other, or to change multiple times between optimizing the first encoder parameters and the coefficient parameters.

In this manner, the coefficient computing module learns, for each text query and each image in the set of images, which aspects of each image need to be considered as pertinent to this particular text query. At the same time, the first trainable encoder learns how to extract, from the text query, the salient features that need to be looked for in the given images.

In a further particularly advantageous embodiment, training images are provided to the second trainable encoder. In particular, these training images may comprise one or more of the to-be-retrieved images with which the training examples are labelled.

Second encoder parameters that characterize the behaviour of the second trainable encoder are then optimized towards the goal of improving, when further training examples and/or training images are processed, the rating by the loss function. This optimization can be performed in parallel to, in sequence to, or in any suitable mixture with the optimization of the first encoder parameters and the optimization of the coefficient parameters. In this manner, the second trainable encoder may learn to encode, in the image aspect representations, the aspects of the respective image that are salient with respect to the queries in the domain given by the training examples.

In a further particularly advantageous embodiment, the loss function encourages that coefficients for one single training example differ from one another. In this manner, different image aspect representations are made to specialize on different concepts. Alternatively or in combination to considering the diversity of coefficients in the loss function, the temperature parameter of a computation of a softmax score for the coefficients in the coefficient computing module may be decreased, so as to force the coefficient computing module to output a much sharper distribution among the weights.

In a further particularly advantageous embodiment, the loss function encourages that, in a pool of coefficients collected over a given batch of training examples, the coefficients exhibit a uniform statistical distribution. In this manner, it is encouraged that every aspect of the image gets chosen at some point within the batch of training examples. That is, there are no "orphaned" aspects that are unimportant over the whole domain of text queries given by the batch. Rather, the image aspects representation may be tailored to this domain of text queries.

The methods may be wholly or partially computer-implemented and embodied in software. The invention therefore also relates to a computer program with machine-readable instructions that, when executed by one or more computers and/or compute instances, cause the one or more computers and/or compute instances to perform a method described above. Herein, control units for vehicles or robots and other embedded systems that are able to execute machine-readable instructions are to be regarded as computers as well. Compute instances comprise virtual machines, containers or other execution environments that permit execution of machine-readable instructions in a cloud.

A non-transitory storage medium, and/or a download product, may comprise the computer program. A download product is an electronic product that may be sold online and transferred over a network for immediate fulfilment. One or more computers and/or compute instances may be equipped with said computer program, and/or with said non-transitory storage medium and/or download product.

### Description of the Figures

In the following, the invention is illustrated using Figures without any intention to limit the scope of the invention. The Figures show:
Figure 1: Exemplary embodiment of the method 100 for retrieving one or more images 2 from a set of images 3 based on a text query 1;
Figure 2: Illustration of the query-dependent aggregation of image aspect representations 2a1-2a5 into one single image representation 2a;
Figure 3: Exemplary embodiment of the system 20 for retrieving one or more images 2 from a set of images 3 based on a text query 1;
Figure 4: Exemplary embodiment of the method 300 for training the system 20 shown in Figure 3.

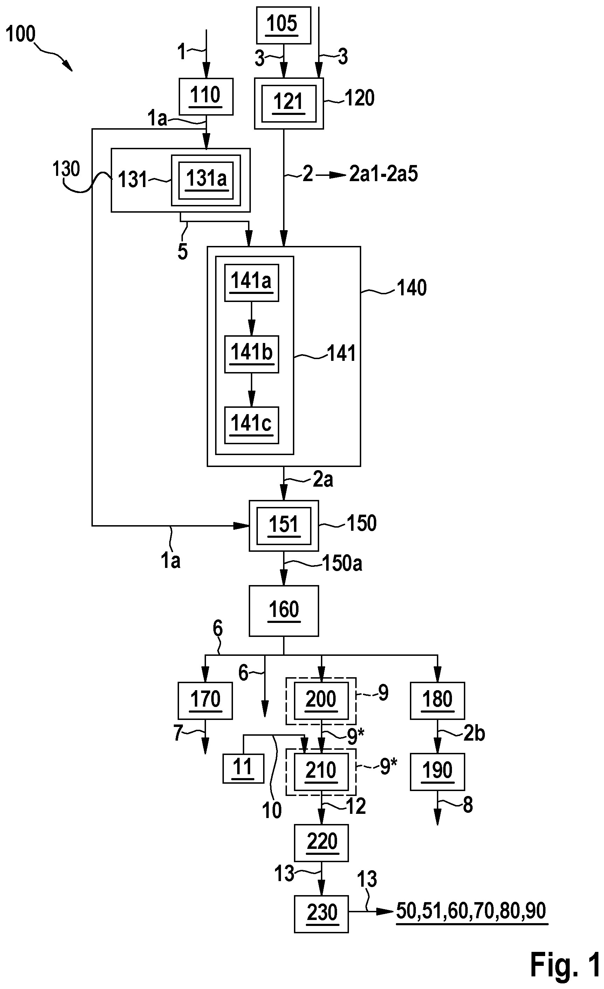

Figure 1 is a schematic flow chart of an embodiment of the method 100 for retrieving one or more images 2 from a set of images 3 based on a text query 1.

According to block 105, the set of images 3 may comprise frames of a video data stream.

In step 110, a representation of the text query 1 in a working space 4 is computed as a query representation 1a.

In step 120, for each image 2 in the set of images 3, a plurality of representations in the working space 4 is provided as image aspect representations 2a1-2a5.

According to block 121, these different image aspect representations 2a1-2a5 may comprise
- different compositions of vector representations of parts of the image 2 and/or
- representations 2a1-2a5 obtained from the image 2 by differently trained encoders, and/or by encoders with different architectures, and/or
- representations 2a1-2a5 obtained as different samples produced from the image 2 by a probabilistic encoder.

In step 130, based at least in part on the query representation 1a, a set of coefficients 5 is determined in a predetermined manner.

According to block 131, the coefficients 5 may be determined from the query representation 1a by a trained machine learning model. In particular, according to block 131a, the trained machine learning model may comprise a neural network with at least one fully connected layer.

In step 140, for each image 2 in the set of images 3, based on the coefficients 5, the respective image aspect representations 2a1-2a5 are aggregated into a respective image representation 2a in a predetermined manner.

According to block 141, the aggregating 140 may comprise computing a weighted sum of the image aspect representations 2a1-2a5 with the coefficients 5 as weights.

In particular, according to block 141a, a first vector may be set up that is a concatenation of the image aspect representations 2a1-2a5. According to block 141b, a second vector may then be set up that is a concatenation of as many copies of the query representation 1a as there are image aspect representations 2a1-2a5. Herein, each copy of the query representation 1a is multiplied with a corresponding weight of an image representation 2a. According to block 141c, a dot product of the first vector and the second vector may then be computed as the sought weighted sum.

In step 150, the query representation 1a to the image representations 2a. The outcome is a result 150a.

According to block 151, the comparing 150 of the query representation 1a with the image representations 2a may comprise computing cosine similarities between the query representation 1a and the image representations 2a.

In step 160, one or more images 2 to be returned as result 6 of the text query 1 are determined based at least in part on the outcome 150a of the comparison 150.

In the example shown in Figure 1, if the set of images 3 comprises frames of a video data stream according to block 105, in step 170, a position 7 in the video data stream where a situation described in the text query 1 occurs is computed from the result 6 of the text query 1.

In the example shown in Figure 1, for each image 2 returned as result 6 of the text query 1, a textual description 2b stored in association with the respective image 2 is obtained in step 180. In step 190, a description 8 of a scene described in the text query 1 is then determined from said textual descriptions 2b.

In the example shown in Figure 1, in step 200, using at least one image 2 returned as result 6 of the text query 1, a machine learning model 9 is trained. The outcome of this training is the trained state 9* of the machine learning model 9.

In step 210, at least one image 10 captured by at least one sensor 11 may then be inputted to the trained machine learning model 9*. From the output 12 of the trained machine learning model 9*, an actuation signal 13 may then be computed in step 220. In step 230, a vehicle 50, a driving assistance system 51, a robot 60, a quality inspection system 70, a surveillance system 80, and/or a medical imaging system 90, may then be actuated with the actuation signal 13.

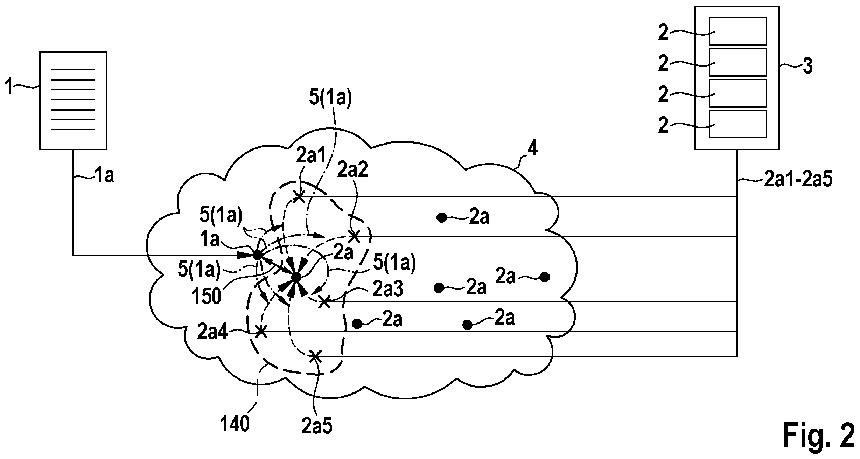

Figure 2 illustrates how different image aspect representations 2a1-2a5 of an image 2 in the set of images 3 may be aggregated in a query-dependent manner. The image aspect representations 2a1-2a5 live in the same working space 4 as a representation 1a of the text query 1. From this representation 1a of the text query 1, coefficients 5(1a) are determined. In step 140 of the method 100 illustrated in Figure 1, the image aspect representations 2a1-2a5 are aggregated based on these coefficients 5(1a) into one single image representation 2a of the image 2. The working space 4 contains many such image representations 2a. The query representation 1a is compared to all these image representations 2a in step 150 of the method 100.

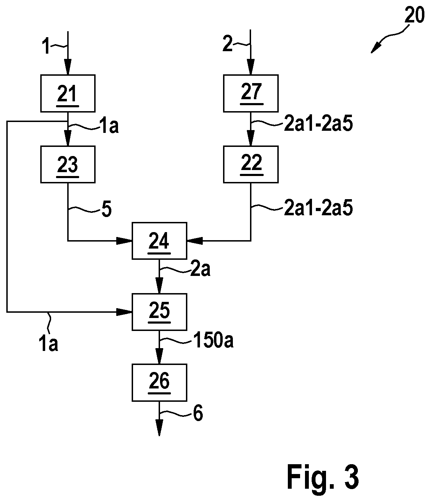

Figure 3 is a schematic block diagram of an exemplary embodiment of the system 20 for retrieving one or more images 2 from a set of images 3 based on a text query 1.

The system 20 comprises a first trainable encoder 21 that is configured to compute a representation of the text query 1 in a working space 4 as a query representation 1a. A memory 22 of the system 20 is configured to store, for each image 2 in the set of images 3, a plurality of representations in the working space 4 as image aspect representations 2a1-2a5. The system 20 also comprises a trainable coefficient computing module 23 that is configured to determine, based at least in part on the query representation 1a, a set of coefficients 5.

A representation computing module 24 of the system 20 is configured to aggregate, for each image 2 in the set of images 3, based on said coefficients 5 received from the coefficient computing module 23, the respective image aspect representations 2a1-2a5 into a respective image representation 2a.

The system 20 further comprises a comparing module 25 that is configured to compare the query representation 1a to the image representations 2a. A result computing module 26 of the system 20 may then determine one or more images 2 to be returned as result 6 of the text query 1 based at least in part on the outcome 150a of said comparison in the comparing module 25.

In the example shown in Figure 3, the system 20 further comprises a second trainable encoder 27 that is configured to compute, for an inputted image 2, a plurality of representations in the working space 4 as image aspect representations 2a1-2a5.

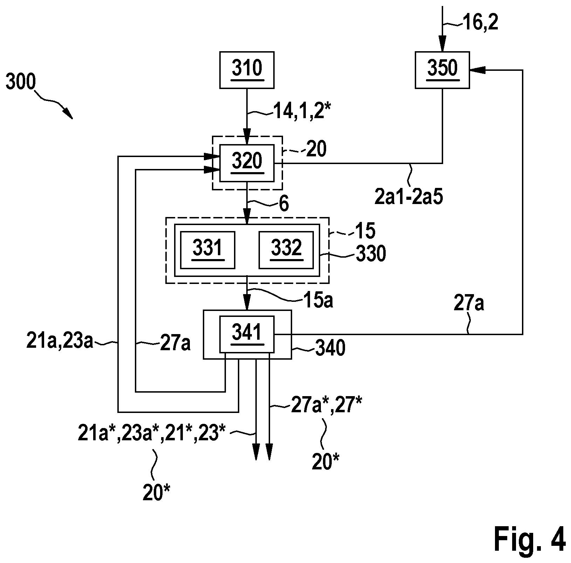

Figure 4 is a schematic flow chart of an embodiment of the method 300 for training the system 20 illustrated in Figure 3.

In step 310, a set of training examples 14 is provided. Each training example 14 comprises a text query 1 that is labelled with a to-be-retrieved image 2* as ground truth.

In step 320, for each training example 14, the system 20 processes the text query 1 into a result 6 comprising one or more returned images 2.

In step 330, a predetermined loss function 15 rates how well the so-obtained result 6 corresponds to the to-be-retrieved image 2* with which the respective training example 14 is labelled. The outcome is a rating 15a.

In particular, according to block 331, the loss function 15 may encourage that coefficients 5 for one single training example 14 differ from one another. Alternatively or in combination to this, according to block 332, the loss function 15 may encourage that, in a pool of coefficients 5 collected over a given batch of training examples 14, the coefficients 5 exhibit a uniform statistical distribution.

In step 340, first encoder parameters 21a that characterize the behaviour of the first trainable encoder 21, as well as coefficient parameters 23a that characterize the behaviour of the coefficient computing module 23, are optimized towards the goal of improving, when further training examples 14 are processed, the rating 15a by the loss function 15. The outcome comprises optimized parameters 21a* that characterize the trained state 21* of the first trainable encoder 21, as well as optimized parameters 23a* that characterize the trained state 23* of the coefficient computing module 23.

In the example shown in Figure 4, in step 350, training images 16 are presented to the second trainable encoder 27 that then outputs image aspect representations 2a1-2a5 into the processing in step 320. According to block 341, second encoder parameters 27a that characterize the behaviour of the second trainable encoder 27 may then be optimized as well towards the goal of improving, when further training examples 14 and/or training images 16 are processed, the rating 15a by the loss function 15. The outcome comprises optimized parameters 27a* that characterize the trained state 27* of the second trainable encoder 27.

## Claims

1. A method (100) for retrieving one or more images (2) from a set of images (3) based on a text query (1), comprising the steps of:
• computing (110) a representation of the text query (1) in a working space (4) as a query representation (1a);
• providing (120), for each image (2) in the set of images (3), a plurality of representations in the working space (4) as image aspect representations (2a1-2a5);
• determining (130), based at least in part on the query representation (1a), in a predetermined manner, a set of coefficients (5);
• aggregating (140), for each image (2) in the set of images (3), based on these coefficients (5), in a predetermined manner, the respective image aspect representations (2a1-2a5) into a respective image representation (2a);
• comparing (150) the query representation (1a) to the image representations (2a); and
• determining (160) one or more images (2) to be returned as result (6) of the text query (1) based at least in part on the outcome (150a) of this comparison (150).

2. The method (100) of claim 1, wherein the different image aspect representations (2a1-2a5) comprise (121)
• different compositions of vector representations of parts of the image (2) and/or
• representations (2a1-2a5) obtained from the image (2) by differently trained encoders, and/or by encoders with different architectures, and/or
• representations (2a1-2a5) obtained as different samples produced from the image (2) by a probabilistic encoder.

3. The method (100) of any one of claims 1 to 2, wherein the coefficients (5) are determined (131) from the query representation (1a) by a trained machine learning model.

4. The method (100) of claim 3, wherein the trained machine learning model comprises (131a) a neural network with at least one fully connected layer.

5. The method (100) of any one of claims 1 to 4, wherein the aggregating (140) comprises (141) computing a weighted sum of the image aspect representations (2a1-2a5) with the coefficients (5) as weights.

6. The method (100) of claim 5, wherein the computing of the weighted sum comprises:
• setting up (141a) a first vector that is a concatenation of the image aspect representations (2a1-2a5);
• setting up (141b) a second vector that is a concatenation of as many copies of the query representation (1a) as there are image aspect representations (2a1-2a5), with each copy of the query representation (1a) multiplied with a corresponding weight of an image representation (2a); and
• computing (141c) a dot product of the first vector and the second vector as the sought weighted sum.

7. The method (100) of any one of claims 1 to 6, wherein the comparing (150) of the query representation (1a) with the image representations (2a) comprises computing (151) cosine similarities between the query representation (1a) and the image representations (2a).

8. The method (100) of any one of claims 1 to 7, wherein
• the set of images (3) comprises (105) frames of a video data stream, and
• from the result (6) of the text query (1), a position (7) in the video data stream where a situation described in the text query (1) occurs is computed (170).

9. The method (100) of any one of claims 1 to 8, further comprising:
• obtaining (180), for each image (2) returned as result (6) of the text query (1), a textual description (2b) stored in association with the respective image (2); and
• determining (190) a description (8) of a scene described in the text query (1) from said textual descriptions (2b).

10. The method (100) of any one of claims 1 to 9, further comprising:
training (200), using at least one image (2) returned as result (6) of the text query (1), a machine learning model (9).

11. The method (100) of claim 10, further comprising:
• inputting (210) at least one image (10) captured by at least one sensor (11) to the trained machine learning model (9*);
• computing (220), from the output (12) of the trained machine learning model (9*), an actuation signal (13); and
• actuating (230) a vehicle (50), a driving assistance system (51), a robot (60), a quality inspection system (70), a surveillance system (80), and/or a medical imaging system (90), with the actuation signal (13).

12. A system (20) for retrieving one or more images (2) from a set of images (3) based on a text query (1), the system (20) comprising:
• a first trainable encoder (21) that is configured to compute a representation of the text query (1) in a working space (4) as a query representation (1a);
• a memory (22) that is configured to store, for each image (2) in the set of images (3), a plurality of representations in the working space (4) as image aspect representations (2a1-2a5);
• a trainable coefficient computing module (23) that is configured to determine, based at least in part on the query representation (1a), a set of coefficients (5);
• a representation computing module (24) that is configured to: aggregate, for each image (2) in the set of images (3), based on said coefficients (5), the respective image aspect representations (2a1-2a5) into a respective image representation (2a);
• a comparing module (25) that is configured to compare the query representation (1a) to the image representations (2a); and
• a result computing module (26) that is configured to determine one or more images (2) to be returned as result (6) of the text query (1) based at least in part on the outcome (150a) of said comparison.

13. The system (100) of claim 12, further comprising: a second trainable encoder (27) that is configured to compute, for an inputted image (2), a plurality of representations in the working space (4) as image aspect representations (2a1-2a5).

14. A method (300) for training the system (20) of any one of claims 12 to 13, comprising the steps of:
• providing (310) a set of training examples (14), each training example (14) comprising a text query (1) that is labelled with a to-be-retrieved image (2*) as ground truth;
• for each training example (14), processing (320), by the system (20) according to any one of claims 12 to 13, the text query (1) into a result (6) comprising one or more returned images (2);
• rating (330), by a predetermined loss function (15), how well this result (6) corresponds to the to-be-retrieved image (2*) with which the respective training example (14) is labelled; and
• optimizing (340) first encoder parameters (21a) that characterize the behaviour of the first trainable encoder (21), as well as coefficient parameters (23a) that characterize the behaviour of the coefficient computing module (23), towards the goal of improving, when further training examples (14) are processed, the rating (15a) by the loss function (15).

15. The method (300) of claim 14, further comprising:
• providing (350) images (2) from a set of training images (16) to the second trainable encoder (27); and
• further optimizing (341) second encoder parameters (27a) that characterize the behaviour of the second trainable encoder (27) towards the goal of improving, when further training examples (14) and/or training images (16) are processed, the rating (15a) by the loss function (15).

16. The method (300) of any one of claims 14 to 15, wherein the loss function (15) encourages (331) that coefficients (5) for one single training example (14) differ from one another.

17. The method (300) of any one of claims 14 to 16, wherein the loss function (15) encourages (332) that, in a pool of coefficients (5) collected over a given batch of training examples (14), the coefficients (5) exhibit a uniform statistical distribution.

18. A computer program, comprising machine-readable instructions that, when executed by one or more computers and/or compute instances, cause the one or more computers and/or compute instances to perform a method (100, 300) according to any one of claims 1 to 11 or 14 to 17.

19. A machine-readable data carrier and/or a download product with the computer program of claim 18.

20. A non-transitory machine-readable data carrier with the computer program of claim 18, and/or with the machine-readable data carrier and/or download product of claim 19.

## Amended claims

### Amended claims in accordance with Rule 137(2) EPC.

1. A method (100) for retrieving one or more images (2) from a set of images (3) based on a text query (1), comprising the steps of:
• computing (110) a representation of the text query (1) in a working space (4) as a query representation (1a);
• providing (120), for each image (2) in the set of images (3), a plurality of representations in the working space (4) as image aspect representations (2a1-2a5);
• determining (130), based at least in part on the query representation (1a), in a predetermined manner, a set of coefficients (5), wherein the coefficients (5) are determined (131) from the query representation (1a) by a trained machine learning model;
• aggregating (140), for each image (2) in the set of images (3), based on these coefficients (5), in a predetermined manner, the respective image aspect representations (2a1-2a5) into a respective image representation (2a);
• comparing (150) the query representation (1a) to the image representations (2a); and
• determining (160) one or more images (2) to be returned as result (6) of the text query (1) based at least in part on the outcome (150a) of this comparison (150).

2. The method (100) of claim 1, wherein the different image aspect representations (2a1-2a5) comprise (121)
• different compositions of vector representations of parts of the image (2) and/or
• representations (2a1-2a5) obtained from the image (2) by differently trained encoders, and/or by encoders with different architectures, and/or
• representations (2a1-2a5) obtained as different samples produced from the image (2) by a probabilistic encoder.

3. The method (100) of any one of claims 1 to 2, wherein the trained machine learning model comprises (131a) a neural network with at least one fully connected layer.

4. The method (100) of any one of claims 1 to 3, wherein the aggregating (140) comprises (141) computing a weighted sum of the image aspect representations (2a1-2a5) with the coefficients (5) as weights.

5. The method (100) of claim 4, wherein the computing of the weighted sum comprises:
• setting up (141a) a first vector that is a concatenation of the image aspect representations (2a1-2a5);
• setting up (141b) a second vector that is a concatenation of as many copies of the query representation (1a) as there are image aspect representations (2a1-2a5), with each copy of the query representation (1a) multiplied with a corresponding weight of an image representation (2a); and
• computing (141c) a dot product of the first vector and the second vector as the sought weighted sum.

6. The method (100) of any one of claims 1 to 5, wherein the comparing (150) of the query representation (1a) with the image representations (2a) comprises computing (151) cosine similarities between the query representation (1a) and the image representations (2a).

7. The method (100) of any one of claims 1 to 6, wherein
• the set of images (3) comprises (105) frames of a video data stream, and
• from the result (6) of the text query (1), a position (7) in the video data stream where a situation described in the text query (1) occurs is computed (170).

8. The method (100) of any one of claims 1 to 7, further comprising:
• obtaining (180), for each image (2) returned as result (6) of the text query (1), a textual description (2b) stored in association with the respective image (2); and
• determining (190) a description (8) of a scene described in the text query (1) from said textual descriptions (2b).

9. The method (100) of any one of claims 1 to 8, further comprising: training (200), using at least one image (2) returned as result (6) of the text query (1), a machine learning model (9).

10. The method (100) of claim 9, further comprising:
• inputting (210) at least one image (10) captured by at least one sensor (11) to the trained machine learning model (9*);
• computing (220), from the output (12) of the trained machine learning model (9*), an actuation signal (13); and
• actuating (230) a vehicle (50), a driving assistance system (51), a robot (60), a quality inspection system (70), a surveillance system (80), and/or a medical imaging system (90), with the actuation signal (13).

11. A system (20) for retrieving one or more images (2) from a set of images (3) based on a text query (1), the system (20) comprising:
• a first trainable encoder (21) that is configured to compute a representation of the text query (1) in a working space (4) as a query representation (1a);
• a memory (22) that is configured to store, for each image (2) in the set of images (3), a plurality of representations in the working space (4) as image aspect representations (2a1-2a5);
• a trainable coefficient computing module (23) that is configured to determine, based at least in part on the query representation (1a), a set of coefficients (5);
• a representation computing module (24) that is configured to: aggregate, for each image (2) in the set of images (3), based on said coefficients (5), the respective image aspect representations (2a1-2a5) into a respective image representation (2a);
• a comparing module (25) that is configured to compare the query representation (1a) to the image representations (2a); and
• a result computing module (26) that is configured to determine one or more images (2) to be returned as result (6) of the text query (1) based at least in part on the outcome (150a) of said comparison.

12. The system (100) of claim 11, further comprising: a second trainable encoder (27) that is configured to compute, for an inputted image (2), a plurality of representations in the working space (4) as image aspect representations (2a1-2a5).

13. A method (300) for training the system (20) of any one of claims 11 to 12, comprising the steps of:
• providing (310) a set of training examples (14), each training example (14) comprising a text query (1) that is labelled with a to-be-retrieved image (2*) as ground truth;
• for each training example (14), processing (320), by the system (20) according to any one of claims 12 to 13, the text query (1) into a result (6) comprising one or more returned images (2);
• rating (330), by a predetermined loss function (15), how well this result (6) corresponds to the to-be-retrieved image (2*) with which the respective training example (14) is labelled; and
• optimizing (340) first encoder parameters (21a) that characterize the behaviour of the first trainable encoder (21), as well as coefficient parameters (23a) that characterize the behaviour of the coefficient computing module (23), towards the goal of improving, when further training examples (14) are processed, the rating (15a) by the loss function (15).

14. The method (300) of claim 13, further comprising:
• providing (350) images (2) from a set of training images (16) to a second trainable encoder (27); and
• further optimizing (341) second encoder parameters (27a) that characterize the behaviour of the second trainable encoder (27) towards the goal of improving, when further training examples (14) and/or training images (16) are processed, the rating (15a) by the loss function (15).

15. The method (300) of any one of claims 13 to 14, wherein the loss function (15) encourages (331) that coefficients (5) for one single training example (14) differ from one another.

16. The method (300) of any one of claims 13 to 15, wherein the loss function (15) encourages (332) that, in a pool of coefficients (5) collected over a given batch of training examples (14), the coefficients (5) exhibit a uniform statistical distribution.

17. A computer program, comprising machine-readable instructions that, when executed by one or more computers and/or compute instances, cause the one or more computers and/or compute instances to perform a method (100, 300) according to any one of claims 1 to 10 or 13 to 16.

18. A machine-readable data carrier and/or a download product with the computer program of claim 17.

19. One or more computers and/or compute instances with the computer program of claim 17, and/or with the machine-readable data carrier and/or download product of claim 18.
